Europäisches Patentamt

**European Patent Office**

**Office européen des brevets**

(11) Publication number: **0 069 417**
A1

## (12) EUROPEAN PATENT APPLICATION

(21) Application number: **82200762.1**

(22) Date of filing: **19.06.82**

(51) Int. Cl.³: **B 29 C 27/14**
**B 30 B 15/06**

(30) Priority: **25.06.81 NL 8103061**

(43) Date of publication of application:
**12.01.83 Bulletin 83/2**

(84) Designated Contracting States:
**AT BE CH DE FR GB IT LI LU NL SE**

(71) Applicant: **B.V. Handelsonderneming SARECO**
**Klingelbeekseweg 35**
**NL-6862 VS Oosterbeek(NL)**

(72) Inventor: **Matthijssen, Johannes Maria**
**Margrietstraat 57**
**NL-6833 AJ Arnhem(NL)**

(74) Representative: **Noz, Franciscus Xaverius, Ir. et al,**
**Boschdijk 155 P.O. Box 645**
**NL-5600 AP Eindhoven(NL)**

(54) Method of manufacturing decorative construction or coating material.

(57) The invention relates to a method of manufacturing a decorative construction or coating material by applying a decorative coating to a substrate via an adhesive layer and by compressing the same at an increased pressure and temperature into a single united, whereby between the decorative coating and the surface of the pressure exerting tool is sandwiched an intermediate layer which can assume the shape of the decorative layer at an increased pressure and temperature, which is sufficiently pervious to heat and which resumes in a reversible manner the original shape after the elimination of the pressure.

-1-

Method of manufacturing decorative construction or
coating material.

The invention relates to a method of manufacturing decorative con-
stuction or coating material by applying to a substrate by means of an adhesive layer a decorative coating and by compressing the same to a single
unit at increased temperature and pressure. The invention furthermore
relates to sheet-shaped construction or coating material provided with a
decorative coating and to objects such as walls made from said material.

For the manufacture of partitions construction or veneer material
for kitchens and the like a comparatively cheap kind of wood is often used,
for example, particled board provided with a decorative coating, preferably
of a tissue such as jute or a rush or bamboo mat so that the substrate, for
example, a particled board has a fine appearance. First the tissue or the
like was glued to the substrate, but the final product shows less satisfactory adhesion and the tissue was impregnated with glue. A further method
of manufacturing such decorative construction material or coating material
comprised the steps of applying to the substrate, for example, particled
board, a melamine-containing paper layer and of applying thereto the tissue
or the like for the decorative appearance. To the tissue was then applied a transparent "overlay", the assembly being compressed at an increased temperature so that the melamine in the melamine-containing paper was hardened and a satisfactory adhesion between the substrate and the tissue was obtained. A satisfactory adhesion between substrate and tissue was obtained, it is true, but it is a disadvantage that the resultant decorative construction or coating material has a smoothed surface, because the tool (the pressing plate) exerting pressure on the tissue and the substrate brings about loss of the tissue structure so that the decorative material is only smooth and soes no longer give the impression of a natural tissue forming the surface layer. The pressing plate may, as an alternative, be provided with a given structure, which is thus printed into the tissue. However, due to its unnaturally high uniformity this structure is not attractive.

An improvement of this method is proposed in German Patent Application 1,931,590, in which a thermo-plastic foil is sandwiched between the tissue and the pressing plate, but in practice this thermo-plastic foil can be used only once, whereas the desired result was not obtained and the costs were increased to an extent such that such a foil of polyvinylchloride, poly-alkylmethacrylate or polyethylene has not been used in practice on a large scale. In the Examples it is stated that the foil has a thickness of 100 to 300 µm (0.1 to 0.3 mm)

Further research and experiments have now enabled to develop a method by which a decorative construction or coating material can be obtained, which consists of a substrate to which a decorative coating layer, for example, a tissue is applied, which decorative layer can be satisfactorily adhered to the substrate whilst afterwards the tissue structure is maintained so that feeling the decorative construction or coating material embodying the invention gives the impression of the original tissue not applied to a substrate. The method embodying the invention is characterized in that between the decorative layer and the pressing plate an intermediate layer is sandwiched which can assume the shape of the decorative layer at an increased pressure and temperature, which is pervious to heat and which resumes the original shape in a reversible manner after elimination of the pressure. The material used herein is formed by a mat of silicon rubber, though other material meeting the aforesaid requirements may also be employed. Preferably the pressing plate is provided with such a mat having a thickness of 0.5 to 3 mm, which can be frequently used and does not require any further additional processing so that the costs in carrying out this method are not increased. Said thickness of 0.5 to 3 mm is stated only as a preferred range of values.

The mat used in accordance with the invention, which comprises a silicon rubber layer, may furthermore comprise as a supporting layer a foam layer, provided the silicon rubber layer continues permitting the exertion of sufficient pressure on the assembly of the substrate and the layers applied thereto, the silicon rubber "fluidizing" to an extent such that during the exertion of the pressure the silicon rubber layer assumes the shape of the tissue so that during compression the tissue structure is maintained. In the method embodying the invention the silicon rubber mat does substantially not resist the passage of heat owing to the high heat transfer coefficient of the material employed.

In carrying out the method embodying the invention an assembly of the following materials is exposed to an increased pressure and temperature, resulting in the desired decorative construction or coating material. The assembly comprises:

1. a substrate, for example, particled board,
2. melamine paper,
3. tissue,
4. overlay,
5. release paper.

This assembly is introduced into a press and with the aid of a pressing plate provided with a mat embodying the invention as described above the assembly is heated to a temperature of about $180^{\circ}$C and exposed to a pressure of about 30 atmospheres. After a period of pressing for about 90 seconds under these conditions the assembly has adhered to an extent such that the desired decorative construction or coating material according to the invention is obtained.

Further details of the above-mentioned materials are as follows:

1. The substrate is preferably formed by wood, particularly by particled board, which is embellished by the application of the decorative layer; as an alternative such a decorative layer may be applied to synthetic resins or metals.

2. Melamine paper. This is paper impregnated with melamine resin and then dried. The melamine absorbed provides the adhesion of the tissue to the substrate when the assembly is exposed to the increased temperature or pressure.

3. The tissue may consist of jute, cotton, rush, bamboo, which enumeration should not be considered to be limitative because in general any tissue can be used, which can resist the temperature used.

4. Overlay; this is a transparent paper also impregnated with melamine resin and dried. During the compression the melamine from the melamine paper (2) mixes with the melamine from the "overlay".

5. Release paper. This paper is provided on one side with a layer of polyester and/or silicon in order to produce a glossy ar non-glossy surface.

The decorative construction or coating material obtained in accordance with the invention has a structure similar to the tissue employed and the tissue layer satisfactorily adheres to the substrate so that the assembly can be washed like normal melaminized particled board and remains resistant against light.

-1-

CLAIMS

1.       A method of manufacturing a decorative construction or coating material by applying a decorative coating to a substrate via an adhesive layer and by compressing the same at an increased pressure and temperature into a single unit characterized in that between the decorative coating and the surface of the pressure exerting tool is sandwiched an intermediate layer which can assume the shape of the decorative layer at an increased pressure and temperature, which is sufficiently pervious to heat and which resumes in a reversible manner the original shape after the elimination of the pressure.

2.       A method as claimed in Claim 1 characterized in that the intermediate layer is formed by a mat of silicon rubber.

3.       A method as claimed in Claim 2 characterized in that the mat is arranged on the surface of the pressure exerting tool and has a thickness of 0.5 to 3 mm.

4.       A method as claimed in Claim 2 characterized in that the mat comprises a layer of silicon rubber and a foam layer as a support.

5.       Objects made from the decorative construction or coating material obtained by a method as described in Claims 1 to 4.

0069417

## European Patent Office

**EUROPEAN SEARCH REPORT**

Application number

EP 82 20 0762

### DOCUMENTS CONSIDERED TO BE RELEVANT

| Category | Citation of document with indication, where appropriate, of relevant passages | Relevant to claim | CLASSIFICATION OF THE APPLICATION (Int. Cl. ³) |
|---|---|---|---|
| X,Y | FR-A-2 376 474  (GESELLSCHAFT FÜR AUTOMATION UND ORGANISATION) *Page 1, lines 1-4; page 2, line 26 - page 3, line 6; page 4, line 1 - page 5, line 14; page 6, lines 1-20; figures 1-4* & GB - A - 1 576 168 | 1-3,5 | B 29 C  27/14 B 30 B  15/06 |
| Y,D | DE-A-1 931 590  (GOLDSCHMIDT A.G.) *Page 4, line 13 - page 6, line 16* & GB - A - 1 245 333 | 1,5 | |
| A | FR-A-2 116 404  (ALUMINIUM SUISSE) *Page 2, line 24 - page 3, line 11; page 6, claims 1,3-6* | 1-3 | |
| A | DE-A-2 405 376  (VOELSKOW) *Claims 1-3* | 1,2 | TECHNICAL FIELDS SEARCHED (Int. Cl. ³)  B 29 C B 29 J B 30 B |

The present search report has been drawn up for all claims

| Place of search | Date of completion of the search | Examiner |
|---|---|---|
| THE HAGUE | 04-10-1982 | LAVAL J.C.A |